# EUROPÄISCHE PATENTSCHRIFT

(11) **EP 4 519 954 B1**
(45) Veröffentlichungstag und Bekanntmachung des Hinweises auf die Patenterteilung: **01.04.2026**
(21) Anmeldenummer: 23717575.7
(22) Anmeldetag: 14.04.2023
(51) Int. Cl.: H02J 15/00, H02J 3/38, C25B 1/04, H02M 7/08, H02M 7/12, H02M 7/21

(54) **ENERGIEVERSORGUNGSVORRICHTUNG FÜR EINE ELEKTROLYSEEINHEIT UND ELEKTROLYSEANLAGE**
ENERGY SUPPLY DEVICE FOR AN ELECTROLYSIS UNIT AND ELECTROLYSIS INSTALLATION
DISPOSITIF D'ALIMENTATION EN ÉNERGIE POUR UNE UNITÉ D'ÉLECTROLYSE ET INSTALLATION D'ÉLECTROLYSE

(30) Priorität: 05.05.2022 DE 102022111107
(43) Veröffentlichungstag der Anmeldung: 12.03.2025
(73) Patentinhaber: SMA Solar Technology AG, 34266 Niestetal (DE)
(72) Erfinder: JUCHEM, Ralf, 34587 Felsberg (DE); FALK, Andreas, 34131 Kassel (DE); VOLL, Bernhard, 34253 Lohfelden (DE)
(86) Internationale Anmeldenummer: PCT/EP2023/059755
(87) Internationale Veröffentlichungsnummer: WO 2023/213513

(56) Entgegenhaltungen:
- EP-A1- 2 228 894
- EP-A1- 3 556 905
- DE-A1- 102020 103 076
- DE-A1- 102020 124 964

## Beschreibung

### Technisches Gebiet

Die Patentanmeldung betrifft eine Energieversorgungsvorrichtung für eine Elektrolyseeinheit und eine Elektrolyseanlage mit einer derartigen Energieversorgungsvorrichtung.

### Stand der Technik

Wasserstoff kann unter Zufuhr von elektrischer Energie und mittels elektrolytischer Zersetzung aus Wasser erzeugt werden. Dabei erfolgt die industrielle Wasserstofferzeugung vielmals durch einen Elektrolyseur, der über einen Gleichrichter aus einem Energieversorgungsnetz, beispielsweise einem Mittelspannungsnetz, versorgt wird. Es ist bekannt, dass die Elektrolyseure Alterungseffekten unterworfen sind, was sich bei vorgegebener DC-Eingangsspannung des Elektrolyseurs im Laufe der Alterung in einer Abnahme der Wasserstofferzeugungsrate äußert. Die Wasserstofferzeugungsrate hängt direkt von einem Stromdurchsatz des Elektrolyseurs ab und steigt typischerweise mit ansteigender DC-Eingangsspannung des Elektrolyseurs. Um auch mit fortschreitender Alterung des Elektrolyseurs noch eine vorgegebene Wasserstofferzeugungsrate erzielen zu können, muss daher dessen DC-Eingangsspannung erhöht werden.

Das Problem des alterungsbedingten Anstiegs der Versorgungsspannung des Elektrolyseurs wird im Stand der Technik herkömmlicherweise dadurch gelöst, dass ein Transformator, über den der Gleichrichter mit dem Energieversorgungsnetz verbunden ist, einen sogenannten Stufenschalter aufweist. Über den Stufenschalter, der sich üblicherweise auf einer Primärseite des Transformators befindet, kann ein Übersetzungsverhältnis des Transformators geändert werden. Somit kann eine Spannungsamplitude der Wechselspannung, die dem Gleichrichter auf seiner AC-Seite bereitgestellt wird, im Laufe der Zeit angehoben (oder auch abgesenkt) werden. Durch eine Anhebung der Wechselspannungsamplitude können die Alterungseffekte des Elektrolyseurs zumindest teilweise kompensiert werden, ohne dass der Gleichrichter mit zunehmender Alterung des Elektrolyseurs mit signifikant höheren Wandlungsverlusten betrieben werden muss.

Neben dem Elektrolyseur beinhaltet die Elektrolyseeinheit zusätzlich auch Hilfsaggregate, beispielsweise Kühleinrichtungen, Pumpen, Heizeinrichtungen etc., die die von dem Elektrolyseur benötigten Medien in vorgegebener Qualität (Druck, Temperatur, etc.) bereitstellen und abführen. Die elektrische Versorgung der Hilfsaggregate erfolgt üblicherweise über eine standardisierte Wechselspannung (z.B. 400 V, 480 V), die bezogen auf ihre Spannungsamplitude typischerweise einen engen Toleranzbereich aufweist. Indem nun das Übersetzungsverhältnis des Transformators über den primärseitigen Stufenschalter geändert wird, hat dies auch einen Einfluss auf die sekundärseitige Wechselspannung zur Versorgung der Hilfsaggregate, diese wird nämlich ebenfalls angehoben und würde ohne weitere Gegenmaßnahmen den erlaubten Toleranzbereich verlassen.

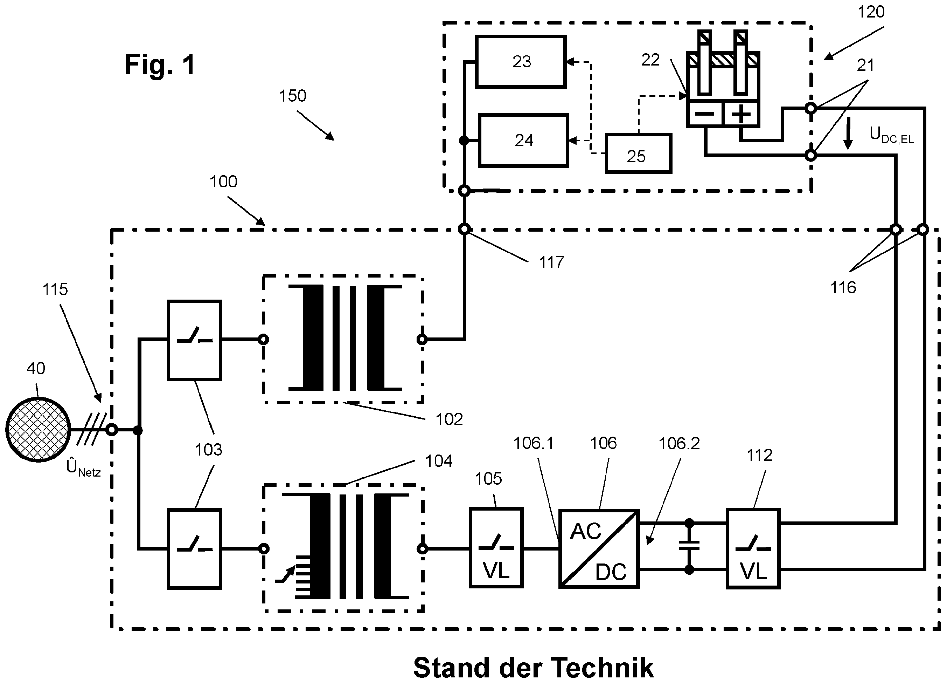

Um einen Anstieg der für die Hilfsaggregate verwendeten Wechselspannung zu vermeiden, ist ein Aufbau einer Elektrolyseanlage 150 mit einer Energieversorgungsvorrichtung 100 und einer Elektrolyseeinheit 120 gemäß **Fig. 1** bekannt. Die Energieversorgungsvorrichtung 100 beinhaltet zwei separate Transformatoren 102, 104, die jeweils mit ihrer Primärseite über einen Netzanschluss 115 der Energieversorgungsvorrichtung 100 mit einem Energieversorgungsnetz 40 verbunden sind. Über den einen ersten Transformator 104 wird ein Elektrolyseur 22 der Elektrolyseeinheit 120 mit einer DC-Eingangsspannung U_{DC,EL} versorgt. Zu diesem Zweck ist der erste Transformator 104 sekundärseitig über eine AC-Trenneinheit 105, einen AC/DC-Wandler 106, eine DC-Trenneinheit 112 und einen Gleichspannungsausgang 116 der Energieversorgungsvorrichtung 100 mit einem Gleichspannungseingang (DC-Eingang) 21 des Elektrolyseurs 22 verbunden, mit der ein Elektrolyseur 20 der Elektrolyseeinheit 120 versorgt wird. Der zweite Transformator 102 dient der elektrischen Versorgung von Hilfsaggregaten 23, 24 der Elektrolyseeinheit 120 mit einer standardisierten Wechselspannung und ist zu diesem Zweck sekundärseitig über einen Hilfsleistungsausgang 117 der Energieversorgungsvorrichtung 100 mit den Hilfsaggregaten 23, 24 der Elektrolyseeinheit 120 verbunden. Lediglich der erste Transformator 104, nicht hingegen der zweite Transformator 102, weist einen Stufenschalter zur Kompensation von Alterungseffekten des Elektrolyseurs 22 auf. Obwohl der zweite Transformator 102 keinen Stufenschalter benötigt und von seiner Nominalleistung üblicherweise deutlich geringer ausgelegt ist als der erste Transformator 104, und obwohl die zwei Transformatoren 102, 104 nicht zwingend als Mehrfachwicklungs-Transformatoren ausgelegt werden müssen, so ist die Lösung insgesamt dennoch kostenintensiv, insbesondere dann, wenn es sich bei dem Energieversorgungsnetz 40 um ein Mittelspannungsnetz handelt und der zweite Transformator 102 als ein separater Mittelspannungstransformator ausgebildet ist.

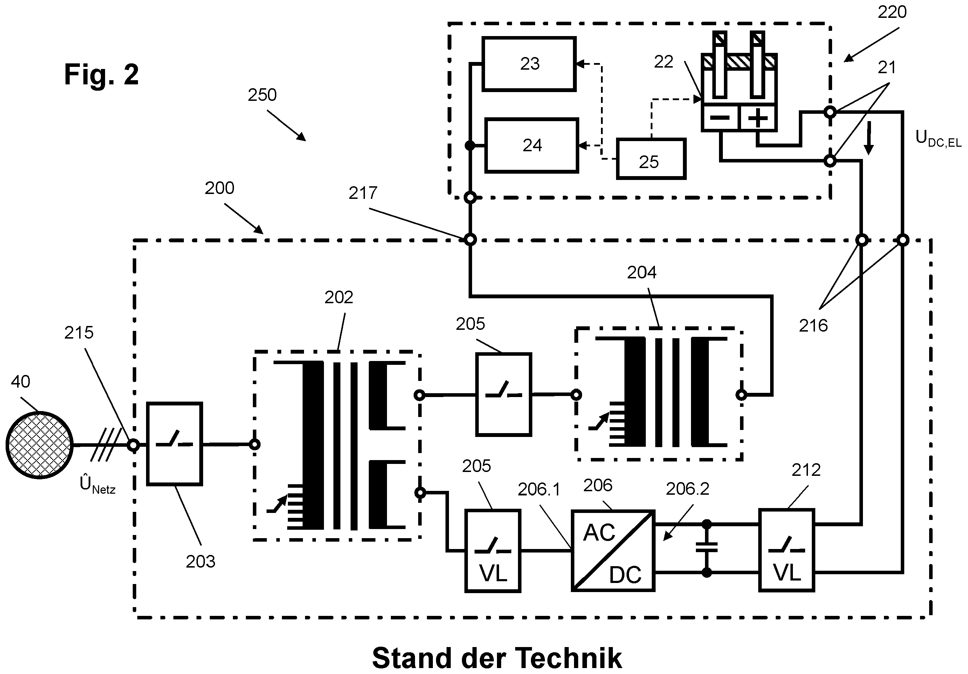

Eine weitere herkömmliche Variante einer Elektrolyseanlage 250 mit einer Energieversorgungsvorrichtung 200 und einer Elektrolyseeinheit 220 ist in **Fig. 2** dargestellt. Die Versorgungseinheit 200 beinhaltet hier einen als Mehrfachwicklungs-Transformator ausgelegten Transformator 202 mit einer ersten und einer zweiten Sekundärseite, der primärseitig über einen Netzanschluss 215 der Energieversorgungsvorrichtung 200 mit einem Energieversorgungsnetz 40 verbunden ist. Über die erste Sekundärseite des Transformators 202 werden die Hilfsaggregate 23, 24 der Elektrolyseeinheit versorgt. Die zweite Sekundärseite dient zur Versorgung des Elektrolyseurs 22 der Elektrolyseeinheit 220 mit einer DC-Eingangsspannung U_{DC,EL}. Sie ist zu diesem Zweck über eine AC-Trenneinheit 205, einen AC/DC-Wandler 206, eine DC-Trenneinheit 212 und den Gleichspannungsausgang 216 der Energieversorgungsvorrichtung 200 mit dem DC-Eingang 21 des Elektrolyseurs 22 verbunden. Der Transformator 202 weist zur Kompensation von Alterungseffekten des Elektrolyseurs 22 primärseitig einen Stufenschalter auf, mit dem eine dem AC/DC-Wandler 206 bereitgestellte Spannungsamplitude der Wechselspannung angehoben wird. Damit die Änderung des Übersetzungsverhältnisses durch den Stufenschalter des Transformators 202 keinen Einfluss auf die Wechselspannung der an dem Hilfsleistungsausgang 217 angeschlossenen Hilfsaggregate 23, 24 hat, weist auch der zweite Transformator 204 einen Stufenschalter auf. Der Stufenschalter des zweiten Transformators 204 wird nun gegenläufig zu dem Stufenschalter des Transformators 202 betrieben, wodurch die Wechselspannung auf der den Hilfsaggregaten 23, 24 zugewandten Sekundärseite des zweiten Transformators 204 wieder abgesenkt wird. Hierdurch kann die Spannungsanhebung des Transformators 202 bei der Versorgung der Hilfsaggregate 23, 24 kompensiert und wieder auf den von den Hilfsaggregaten benötigten standardisierten Wert zurückgestellt werden. Bei dieser herkömmlichen Variante kann als zweiter Transformator 204 ein Niederspannungstransformator eingesetzt werden, der auch nicht zwingend als Mehrfachwicklungs-Transformator auszulegen ist. Allerdings muss er zusätzlich den weiteren Stufenschalter aufweisen. Derartige mit Stufenschalter versehene Transformatoren sind prinzipiell teurer als Transformatoren ohne Stufenschalter. Zusammenfassend sind daher die herkömmlichen Lösungsansätze gemäß der Fig. 1 und 2 in ihrer Umsetzung aufwendig, kostenintensiv und häufig auch fehleranfällig.

Die Druckschrift CN 202930937 U offenbart ein Stromversorgungssystem für einen Elektrolysebehälter. Das System umfasst eine Wechselstrom-Abstufungsstation, eine Stromumwandlungsstation zur Umwandlung von Wechselstrom in Gleichstrom, und den Elektrolysebehälter. Die Stromumwandlungsstation umfasst Abtastschaltungen für einen eingangsseitigen Wechselstrom und eine eingangsseitige Wechselspannung, einen Lastspannungsregler, einen Gleichrichtertransformator, einen Gleichrichter, eine Steuerung, eine Filter- und Leistungskompensationsvorrichtung, sowie Abtastschaltungen für einen ausgangsseitigen Gleichstrom und eine ausgangsseitige Gleichspannung. Die Stromumwandlungsstation ist so ausgelegt, dass eine Verlustleistung des Gleichrichtertransformators aufgrund von Harmonischen wesentlich reduziert wird.

Die Druckschrift WO 2009/144266 A1 offenbart eine dreiphasige Gleichrichterschaltung mit zwei oder mehr Transformatoren, die primärseitig parallel zueinander mit einem Wechselstromnetz verbunden sind und sekundärseitig jeweils an mindestens eine Halbleiter-Gleichrichterbrücke angeschlossen sind. Die an verschiedene Transformatoren angeschlossenen Gleichrichterbrücken sind auf der Gleichstromseite in Reihe geschaltet, um ein Verbrauchergerät mit Gleichstrom zu versorgen. Dabei ist eine der Gleichrichterbrücken eine Thyristor-Gleichrichterbrücke, während die übrige(n) Gleichrichterbrücke(n) Dioden-Gleichrichterbrücken ist/sind.

Die Druckschrift GB 778989 A offenbart eine Elektrolyseanlage mit mehreren elektrolytischen Lasten, wobei jede der elektrolytischen Lasten über ihren eigenen mehrphasigen Gleichrichter von einer separaten sterngeschalteten Gruppe von Sekundärwicklungen eines Transformators versorgt wird. Der Transformator weist zwei Gruppen von Primärwicklungen auf, die mit einer Dreiphasenversorgung verbunden sind. Bei Auftreten eines Fehlers wird nur der betroffene Verbraucher abgeschaltet.

Die Druckschrift DE 897 696 B offenbart ein Elektrolysiergerät mit einer elektrisch angetriebenen Pumpe, einem Flüssigkeitsbehälter, und einer Elektrolysierzelle, die durch die Pumpe mit Flüssigkeit aus dem Behälter gespeist wird. Das Elektrolysiergerät enthält einen Netztransformator, einen Gleichrichter und einen Spannungsregler zur Stromversorgung der Elektrolysierzelle, sowie einen Hilfstransformator und einen Gleichrichter für die Betätigung eines Motors, der die Sole durch die Zelle hindurchpumpt.

Weitere Dokumente zum Stand der Technik sind DE 10 2020 103076 A1, EP 3 556 905 A1, DE 10 2020 124964 A1 und EP 2 228 894 A1.

### Aufgabe der Erfindung

Aufgabe der Erfindung ist es, eine Energieversorgungsvorrichtung für eine Elektrolyseeinheit bereitzustellen, die trotz fortschreitender Alterung des Elektrolyseurs bei dessen Energieversorgung keinen, zumindest keinen signifikanten Anstieg an wandlungsbedingter Verlustleistung erzeugt. Die Energieversorgungseinrichtung soll zudem möglichst kostengünstig realisierbar sein. Es ist weiterhin Aufgabe der Erfindung, eine Elektrolyseanlage mit diesen Eigenschaften bereitzustellen.

Eine erfindungsgemäße Energieversorgungsvorrichtung für eine Elektrolyseeinheit umfasst:
- einen Netzanschluss zum Anschluss der Energieversorgungsvorrichtung an ein Energieversorgungsnetz,
- einen Gleichspannungsausgang zum Anschluss eines Elektrolyseurs der Elektrolyseeinheit, und
- einen Hilfsleistungsausgang zum Anschluss zumindest eines Hilfsaggregates der Elektrolyseeinheit.

Sie umfasst weiterhin einen ersten Mehrfachwicklungs-Transformator mit einer mit dem Netzanschluss der Energieversorgungsvorrichtung verbundenen Primärseite und einer Sekundärseite, die einen ersten sekundärseitigen Anschluss und einen davon galvanisch getrennten zweiten sekundärseitigen Anschluss aufweist. Dabei ist der erste sekundärseitige Anschluss mit dem Hilfsleistungsausgang verbunden und ausgelegt, eine Wechselspannung mit einer ersten Spannungsamplitude Û₁ bereitzustellen. Der zweite sekundärseitige Anschluss ist mit einem AC-Anschluss eines als Gleichrichter operierenden ersten AC/DC-Wandlers verbunden und ausgelegt, eine Wechselspannung mit einer zweiten Spannungsamplitude Û₂ bereitzustellen. Der DC-Anschluss des ersten AC/DC-Wandlers ist mit dem Gleichspannungsausgang der Energieversorgungsvorrichtung verbunden. Die Energieversorgungsvorrichtung umfasst zudem einen zweiten Transformator mit einer mit dem Netzanschluss verbundenen Primärseite und einer Sekundärseite. Dabei weist die Sekundärseite des zweiten Transformators einen dritten sekundärseitigen Anschluss auf, der ausgelegt ist, eine Wechselspannung mit einer dritten Spannungsamplitude Û₃ bereitzustellen und der mit einem AC-Anschluss eines zweiten AC/DC-Wandlers verbunden ist. Der DC-Anschluss des zweiten AC/DC-Wandlers ist mit dem Gleichspannungsausgang verbunden. Dabei sind die Primärseite und der erste sekundärseitige Anschluss des ersten Mehrfachwicklungs-Transformators oder die Primärseite und die Sekundärseite des ersten Mehrfachwicklungs-Transformators jeweils frei von einem Stufenschalter.

Zusätzlich zu dem ersten Mehrfachwicklungs-Transformator und dem zweiten Transformator kann die Energieversorgungsvorrichtung noch einen, gegebenenfalls auch mehrere weitere Transformatoren umfassen. Der eine oder die mehreren weiteren Transformatoren können jeweils mit ihrer Primärseite mit dem Netzanschluss und mit ihrer Sekundärseite über jeweils einen als Gleichrichter operierenden AC/DC-Wandler, bei Transformatoren mit jeweils zwei galvanisch getrennten sekundärseitigen Anschlüssen auch über jeweils zwei als Gleichrichter operierende AC/DC-Wandler, mit dem Gleichspannungsausgang der Energieversorgungsvorrichtung verbunden sein. Die weiteren Transformatoren können jeweils als ein Mehrfachwicklungs-Transformator ausgebildet sein. Die weiteren Transformatoren können, müssen jedoch nicht zwingenderweise, jeweils einen Stufenschalter aufweisen.

Ein Mehrfachwicklungs-Transformator ist ein Transformator, der auf seiner Primärseite und/oder auf seiner Sekundärseite für jede Phase der Wechselspannung jeweils mehr als eine Wicklung beinhaltet. Beispielsweise kann ein Dreiwicklungs-Transformator für jede Phase jeweils eine Wicklung auf seiner Primärseite und jeweils zwei Wicklungen auf seiner Sekundärseite umfassen. Entsprechend kann ein Vierwicklungs-Transformator pro Phase jeweils zwei primärseitige Wicklungen und jeweils zwei sekundärseitige Wicklungen aufweisen. Bei den hier gemeinten Mehrfachwicklungs-Transformatoren sind typischerweise die zwei sekundärseitigen Wicklungen für jede Phase galvanisch voneinander getrennt. Alternativ ist es jedoch auch möglich, dass einer oder auch mehrere der Mehrfachwicklungs-Transformatoren jeweils zwei parallel geschaltete Sekundärwicklungen aufweist bzw. aufweisen. Sofern je Phase auch zwei primärseitigen Wicklungen vorliegen, beispielsweise bei einem Vierwicklungs-Transformator, können diese galvanisch miteinander verbunden, und insbesondere parallel zueinander verschaltet sein. Mit einem Mehrfachwicklungs-Transformator, der für jede Phase jeweils zwei galvanisch voneinander getrennte Sekundärwicklungen aufweist, ist es möglich, eine primärseitig anliegende Wechselspannung mittels zweier unterschiedlicher Übersetzungsverhältnisse in zwei sekundärseitige Wechselspannungen mit unterschiedlichen Spannungsamplituden zu transformieren.

Der Elektrolyseur benötigt für die Elektrolysereaktion chemische Medien in einer vordefinierten chemischen und/oder physikalischen Qualität. Die Medien werden durch die Elektrolysereaktion in andere Medien umgewandelt, die, so umgewandelt, auch wieder abtransportiert werden müssen. Ein Hilfsaggregat der Elektrolyseeinheit dient der chemischen Versorgung des Elektrolyseurs und ist ein Aggregat, welches zur Lieferung der chemischen Medien an den Elektrolyseur und/oder zu dem Abtransport von chemischen Medien von dem Elektrolyseur erforderlich ist. Alternativ oder kumulativ ist es auch möglich, dass das Hilfsaggregat für die Aufbereitung der chemischen Medien verwendet wird, damit diese ihre vordefinierte chemische oder physikalische Qualität erlangen und/oder einhalten. Ein derartiges Hilfsaggregat, wie es beispielsweise bei der elektrolytischen Wasserstofferzeugung aus Wasser Verwendung findet, kann daher insbesondere eine Gaspumpe, eine Flüssigkeitspumpe, einen Gaskompressor, ein Gastrocknungsaggregat, ein Reinigungsaggregat zur Wasserreinigung, ein Kühlaggregat, oder ein Heizaggregat umfassen. Die Elektrolyseeinheit kann üblicherweise eine Mehrzahl gleicher und/oder verschiedener Hilfsaggregate beinhalten.

Bei der erfindungsgemäßen Energieversorgungsvorrichtung dient der erste Mehrfachwicklungs-Transformator dazu, mit seinem ersten sekundärseitigen Anschluss die Hilfsaggregate der Elektrolyseeinheit mit einer Wechselspannung der ersten Spannungsamplitude Û zu versorgen. Die zweite Sekundärwicklung und die dort bereitgestellte Wechselspannung der zweiten Spannungsamplitude Û₂ wird über den ersten AC/DC-Wandler gleichgerichtet und dem Gleichspannungsausgang der Energieversorgungsvorrichtung und nachfolgend dem DC-Eingang des Elektrolyseurs zu dessen Versorgung zugeführt. Der zweite Transformator kann, muss jedoch nicht zwingend ein Mehrfachwicklungs-Transformator sein. Die über ihn an dem dritten sekundärseitigen Anschluss bereitgestellte Wechselspannung mit der dritten Spannungsamplitude Û₃ wird über den zweiten AC/DC-Wandler gleichgerichtet und ebenfalls dem Gleichspannungsausgang der Energieversorgungsvorrichtung und nachfolgend dem DC-Eingang des Elektrolyseurs zu dessen Versorgung zugeführt. Die beiden mit dem DC-Eingang des Elektrolyseurs verbundenen AC/DC-Wandler müssen nicht zu jeder Zeit gleichzeitig aktiviert sein und den Elektrolyseur mit Leistung versorgen. Vielmehr ist es möglich, dass der Elektrolyseur bei niedriger Wasserstofferzeugungsrate, und damit bei relativ zu seiner Nominalleistung geringer Leistungsumsetzung, zunächst durch den zweiten AC/DC-Wandler, und nicht den ersten AC/DC-Wandler versorgt wird. Weiterhin ist es möglich, dass der erste AC/DC-Wandler erst bei einer höheren Leistungsumsetzung des Elektrolyseurs, die näher an der Nominalleistung des Elektrolyseurs liegt, zu dem zweiten AC/DC-Wandler hinzugeschaltet wird. Konkret ist es möglich, dass ein Aufstarten des Elektrolyseurs, gegebenenfalls auch ein Teillastbetrieb des Elektrolyseurs, mit dem zweiten AC/DC-Wandler, nicht aber mit dem ersten AC/DC-Wandler erfolgt. Indem dabei die Übersetzungsverhältnisse an dem zweiten und dem dritten sekundärseitigen Anschluss so gewählt sind, dass die zweite Spannungsamplitude Û₂ größer, insbesondere stets größer als die dritte Spannungsamplitude Û₃ ist, kann eine im Betrieb der Elektrolyseeinheit bzw. der Energieversorgungsvorrichtung entstehende Verlustleistung minimiert werden, wobei der gesamte Arbeitsbereich des Elektrolyseurs in seinem Strom-Spannungs-Diagramm durch zumindest einen der AC/DC-Wandler, gegebenenfalls auch beide AC/DC-Wandler erreichbar ist. Dies gilt auch bei einer alterungsbedingten Zunahme der an dem DC-Eingang des Elektrolyseurs bereitzustellenden DC-Spannung.

Indem die Primärseite und der erste sekundärseitige Anschluss des ersten Mehrfachwicklungs-Transformators oder die Primärseite und die Sekundärseite des ersten Mehrfachwicklungs-Transformators jeweils frei von einem Stufenschalter ist, ist die erste Spannungsamplitude Û₁ der an dem ersten sekundärseitigen Anschluss anliegenden Wechselspannung zeitlich konstant und insbesondere bei einer Alterung des Elektrolyseurs invariant. Sie kann daher stets der standardisierten Wechselspannung entsprechen, die für die Hilfsaggregate der Elektrolyseeinheit benötigt wird. In dem Fall, bei dem auch der gesamte erste Mehrfachwicklungs-Transformator frei von einem Stufenschalter ist, gilt dies in entsprechender Form auch für die an dem zweiten sekundärseitigen Anschluss anliegende Wechselspannung mit der zweiten Spannungsamplitude Û₂. Daher kann der erste Mehrfachwicklungs-Transformator kostengünstig ausgelegt werden. Auch der zweite Transformator kann kostengünstig ausgelegt werden, insbesondere dann, wenn er nicht als Mehrfachwicklungs-Transformator ausgelegt ist und ebenfalls frei von einem Stufenschalter ist. Dennoch können bei der erfindungsgemäßen Energieversorgungsvorrichtung der erste Mehrfachwicklungs-Transformator und der zweite Transformator in Bezug auf ihre Leistungsbereitstellung optimal ausgelastet werden. Dies gilt insbesondere für den ersten Mehrfachwicklungs-Transformator, der mit seinem ersten sekundärseitigen Anschluss die Hilfsaggregate und mit seinem zweiten sekundärseitigen Anschluss den Elektrolyseur versorgt. Zusammenfassend ergibt sich eine kostengünstige Energieversorgungsvorrichtung für eine Elektrolyseeinheit, deren Wandlungsverluste auch bei einer Alterung des Elektrolyseurs nicht signifikant zunehmen.

In einer vorteilhaften Ausführungsform der Energieversorgungsvorrichtung kann der zweite Transformator ebenfalls als ein Mehrfachwicklungs-Transformator ausgebildet sein, dessen Sekundärseite neben dem dritten sekundärseitigen Anschluss einen vierten sekundärseitigen Anschluss aufweist. Der vierte sekundärseitige Anschluss ist ausgelegt, eine Wechselspannung mit einer vierten Spannungsamplitude Û₄ bereitzustellen. Er ist mit einem AC-Anschluss eines dritten AC/DC-Wandlers verbunden, dessen DC-Anschluss mit dem Gleichspannungsausgang der Energieversorgungsvorrichtung verbunden ist. Vorteilhafterweise ist die vierte Spannungsamplitude Û₄ kleiner als die zweite Spannungsamplitude Û₂. Sie kann gleich der dritten Spannungsamplitude Û₃ sein, ist vorteilhafterweise jedoch von dieser verschieden. Auf diese Weise können die AC/DC-Wandler bei der Erzeugung der DC-Eingangsspannung für den Elektrolyseur dessen Arbeitsbereich so abdecken, dass im Betrieb jeder der AC/DC-Wandler einen unterschiedlichen Spannungsbereich abdeckt, bei dem er besonders effizient und mit geringen Wandlungsverlusten operiert.

Die Spannungsbereiche der verschiedenen AC/DC-Wandler können vorteilhafterweise überlappen. Das bedeutet nicht, dass in dem jeweiligen Spannungsbereich nur der diesem Spannungsbereich zugeordnete AC DC Wandler betrieben wird. Vielmehr können in einzelnen oder jedem der Spannungsbereiche auch mehrere, insbesondere alle AC/DC-Wandler gleichzeitig betrieben werden. Davon wird dann jedoch insbesondere der diesem Spannungsbereich zugeordnete AC/DC-Wandler relativ zu den anderen AC/DC-Wandlern mit besonders geringen Wandlungsverlusten betrieben. Unabhängig davon, ob der zweite Transformator ein zweiter Mehrfachwicklungs-Transformator ist oder nicht, kann er vorteilhafterweise einen Stufenschalter auf seiner Primärseite oder seiner Sekundärseite aufweisen. Wenn der Stufenschalter auf der Sekundärseite angeordnet ist, kann das Übersetzungsverhältnis lediglich eines der sekundärseitigen Anschlüsse aus drittem sekundärseitigen Anschluss und viertem sekundärseitigen Anschluss geändert werden. Indem der zweite Transformator einen Stufenschalter aufweist, können ansonsten zunehmende Wandlungsverluste, die bei einer Alterung des Elektrolyseurs beim Betrieb der Energieversorgungsvorrichtung entstehen, weiter minimiert werden.

In einer weiteren Ausführungsform der Energieversorgungsvorrichtung kann der erste AC/DC-Wandler als ein transistorbasierter AC/DC-Wandler ausgebildet sein. Ein transistorbasierter AC/DC-Wandler weist eine Brückenschaltung mit mehreren Brückenzweigen auf, die jeweils eine Reihenschaltung von zumindest zwei Transistoren umfassen. Jeder der Transistoren kann eine antiparallel zu dem Transistor verschaltete separate oder intrinsische Diode aufweisen. Insbesondere können die Transistoren jeweils als ein Insulated Gate Bipolar Transistor (IGBT) oder als ein Metal Oxide Semiconductor Field Effect Transistor (MOSFET) ausgebildet sein. Ein transistorbasierter AC/DC-Wandler erzeugt bei seinem Betrieb an seinem AC-Anschluss einen lediglich geringen Anteil an unerwünschter Blindleistung, die entweder über den Netzanschluss an das Energieversorgungsnetz und/oder von dem ersten sekundärseitigen Anschluss auf den zweiten sekundärseitigen Anschluss als Störsignal übertragen wird. In jedem Fall ist das Störsignal eines transistorbasierten AC/DC-Wandlers deutlich geringer ausgeprägt als das eines thyristorbasierten AC/DC-Wandlers. Zudem ist der transistorbasierte AC/DC-Wandler im Gegensatz zu dem thyristorbasierten AC/DC-Wandler ausgebildet, einen bidirektionalen Leistungsfluss zu erzeugen, er kann also nicht nur gleichrichtend, sondern auch wechselrichtend operieren. Auf diese Weise ist er ebenfalls zur Erzeugung von gewünschter Blindleistung in der Lage, um eine anderweitig erzeugte bzw. vorhandene Blindleistung zumindest zum Teil zu kompensieren. Indem der ersten AC/DC-Wandler transistorbasiert ausgebildet ist, wird ein besonders gering ausgeprägtes Störsignal an dem zweiten sekundärseitigen Anschluss erzeugt. Daher ist auch das auf den ersten sekundärseitigen Anschluss übersprechende Störsignal relativ gering, welches dort den Betrieb der Hilfsaggregate ungünstig beeinflussen könnte. Neben dem ersten AC/DC-Wandler kann optional auch zumindest ein weiterer AC/DC-Wandler, beispielsweise der zweite AC/DC-Wandler und/oder der dritte AC/DC-Wandler als ein transistorbasierter AC/DC-Wandler ausgebildet sein. Auf diese Weise ist es möglich, den zweiten und/oder den dritten AC/DC-Wandler so zu betreiben, dass er eine Kompensationsblindleistung erzeugt, die eine ansonsten vorhandene unerwünschte Blindleistung, beispielsweise eine an dem Netzanschluss vorhandene unerwünschte Blindleistung, zumindest teilweise kompensiert.

In einer weiteren Ausführungsform der Energieversorgungsvorrichtung kann zumindest einer der AC/DC-Wandler, optional auch jeder der AC/DC-Wandler, mit seinem AC-Anschluss über eine Vorlademittel aufweisende AC-Trenneinheit mit dem ihm jeweils zugeordneten Transformator aus erstem Mehrfachwicklungs-Transformator und zweitem Transformator verbunden sein. Ein Vorlademittel dient der Strombegrenzung beim Zuschalten eines noch ungeladenen oder nicht vollständig geladenen Kondensators. Derartige Vorlademittel können aktiv gesteuert oder auch passiv (ungesteuert) ausgebildet sein. Beispielsweise kann ein passiv ausgebildetes Vorlademittel einen Pfad mit einer Reihenschaltung aus einem Vorladewiderstand und einem Schalter und einem zu der Reihenschaltung parallelgeschalteten weiteren Schalter aufweisen. Ein aktiv gesteuertes Vorlademittel kann beispielsweise ein DC/DC-Wandler sein, der ausgebildet ist, in Leistungsflussrichtung tiefsetzend zu operieren.

In einer weiteren Ausführungsform der Energieversorgungsvorrichtung kann zwischen jedem der AC/DC-Wandler und dem Gleichspannungsausgang eine DC-Trenneinheit angeordnet sein. Dabei ist es jedoch nicht erforderlich, dass jede der DC-Trenneinheiten ebenfalls ein Vorlademittel umfasst. Beispielsweise kann eine DC-Trenneinheit, gegebenenfalls können auch mehrere DC-Trenneinheiten, frei von einem Vorlademittel sein. Solche Vorlademittel innerhalb der DC-Trenneinheit sind üblicherweise zur Strombegrenzung bei der Zuschaltung eines Elektrolyseurs vorhanden, da auch der Elektrolyseur insbesondere in seiner Aufstartphase ein kapazitives Verhalten an seinem DC-Eingang aufweist. In der hier vorliegenden Energieversorgungsvorrichtung ist es prinzipiell ausreichend, lediglich eine der DC-Trenneinheiten, insbesondere diejenige DC-Trenneinheit, die bei dem Zuschalten des Elektrolyseurs aktiviert ist, mit einem Vorlademittel zu versehen. Dabei können Kapazitäten der DC-Anschlüsse derjenigen AC/DC-Wandler, die eine geöffnete DC-Trenneinheit aufweisen und daher noch nicht leitend mit dem Elektrolyseur verbunden sind, über die ihnen jeweilig zugeordnete, ein Vorlademittel umfassende AC-Trenneinheit vorgeladen werden. In diesem Fall kann jede der diesen AC/DC-Wandlern zugeordneten DC-Trenneinheiten erst dann geschlossen werden, wenn die elektrischen Potentiale der beiden Kontakte der jeweiligen DC-Trenneinheit so einander angenähert sind, und damit die zwischen den Kontakten anliegende Spannung so gering ist, dass ein hoher transienter Leistungsfluss beim Schließen der entsprechenden DC-Trenneinheit vermieden werden kann. Daher können eine oder mehrere der entsprechenden DC-Trenneinheiten jeweils frei von einem Vorlademittel ausgelegt sein, wodurch die Energieversorgungsvorrichtung besonders preisgünstig realisiert werden kann.

Bei der Energieversorgungsvorrichtung ist es möglich, dass der zweite Transformator ebenfalls als Mehrfachwicklungs-Transformator ausgebildet ist. Wenn dann der erste Mehrfachwicklungs-Transformator und der als Mehrfachwicklungs-Transformator ausgelegte zweite Transformator die gleiche Nominalleistung aufweisen, können mehrere identische Transformatoren innerhalb der Energieversorgungsvorrichtung verwendet werden. Oftmals sind die Nominalleistungen des ersten Mehrfachwicklungs-Transformators und des zweiten Transformators jedoch auf eine Nominalleistung des Elektrolyseurs und der Hilfsaggregate abgestimmt und daher unterschiedlich voneinander. Dabei kann konkret die Nominalleistung des ersten Mehrfachwicklungs-Transformators die des zweiten Transformators übersteigen.

Der erste Mehrfachwicklungs-Transformator der Energieversorgungsvorrichtung kann so ausgebildet sein, dass der zweite sekundärseitige Anschluss eine höhere Nominalleistung aufweist als der erste sekundärseitige Anschluss. Insbesondere kann der zweite sekundärseitige Anschluss eine um zumindest 10% verschiedene, insbesondere eine um zumindest 10% höhere Nominalleistung aufweisen. Besonders vorteilhaft ist es, wenn die Nominalleistung P(2S2) des zweiten sekundärseitigen Anschlusses um einen Faktor 1,5 bis 2,5 höher ist als die Nominalleistung P(2S1) des ersten sekundärseitige Anschlusses, d.h. wenn gilt: 1,5*P(2S1) ≤ P(2S2) ≤ 2,5*P(2S1). Dies ist insbesondere dann der Fall, wenn eine Nominalleistung des Elektrolyseurs eine Nominalleistung aller Hilfsaggregate der Elektrolyseeinheit deutlich übersteigt.

Vorteilhafterweise kann die Nominalleistung P(2S2) des zweiten sekundärseitigen Anschlusses auch größer als die Nominalleistung P(4S3) des dritten sekundärseitigen Anschlusses sein und, sofern vorhanden, auch größer als die Nominalleistung P(4S4) des vierten sekundärseitigen Anschlusses sein. Konkret kann beispielsweise dann, wenn der zweite Transformator als zweiter Mehrfachwicklungs-Transformator ausgebildet ist, die Nominalleistung des zweiten sekundärseitigen Anschlusses P(2S2) größer sein als die halbierte insgesamt auf der Sekundärseite des weiteren Transformators vorhandene Nominalleistung, d.h. es gilt P(2S2) > 0,5 * [P(4S3) + P(4S4)]. Dies ist insbesondere dann vorteilhaft, wenn der dem zweiten sekundärseitigen Anschluss zugeordnete erste AC/DC-Wandler erst bei einem höheren Verbrauch des Elektrolyseurs - und damit erst bei einer höheren an dem DC-Eingang des Elektrolyseurs anliegenden DC-Spannung - durch Schließen der entsprechenden DC-Trenneinheit dem Elektrolyseur zugeschaltet wird.

Wenn die Nominalleistung P(2S2) des zweiten sekundärseitigen Anschlusses die Nominalleistung P(4S3) des dritten und auch die Nominalleistung P(4S4) des vierten sekundärseitigen Anschlusses übersteigt, kann auch die an dem zweiten sekundärseitigen Anschluss anliegende zweite Spannungsamplitude Û₂ größer als die dritte Spannungsamplitude Û₃ und - sofern vorhanden - auch größer als die vierte Spannungsamplitude Û₄ sein. Dadurch kann eine unterschiedliche Nominalleistung der sekundärseitigen Anschlüsse zumindest teilweise über die unterschiedlichen Spannungsamplituden voreingestellt werden. Ein ansonsten erforderlicher Materialeinsatz zur Erhöhung eines Leiterquerschnittes bei einem höheren Nominalstrom kann damit kompensiert, zumindest jedoch reduziert werden.

Sofern der zweite Transformator der Energieversorgungsvorrichtung als ein zweiter Mehrfachwicklungs-Transformator ausgebildet ist, ist es im Hinblick auf eine möglichst einfache Fertigung des Mehrfachwicklungs-Transformators hilfreich, die sekundärseitigen Anschlüsse, hier der dritte und der vierte sekundärseitige Anschluss, mit möglichst gleichen Nominalleistungen auszulegen. Im Hinblick auf einen Betrieb der Elektrolyseanlage mit möglichst geringer wandlungsbedingter Verlustleistung der Energieversorgungsvorrichtung ist es jedoch vorteilhaft, die Nominalleistungen der sekundärseitigen Anschlüsse nicht gleich, sondern bewusst unterschiedlich auszulegen, da so verschiedene DC-Spannungen im Arbeitsbereich des Elektrolyseurs generiert werden, bei der zumindest einer der daran angeschlossenen AC/DC-Wandler möglichst effizient arbeitet. Dabei hat sich herausgestellt, dass eine Nominalleistung des dritten sekundärseitigen Anschlusses P(4S3) vorteilhafterweise unterschiedlich zu der Nominalleistung P(4S4) des vierten sekundärseitigen Anschlusses auszulegen ist, sie sollte jedoch nicht mehr als 40% von der des vierten sekundärseitigen Anschlusses abweichen. Konkret gilt somit vorteilhafterweise, dass die Nominalleistung P(4S3) des dritten sekundärseitigen Anschlusses bis auf einen Faktor zwischen 0,6 und 1,4 einer Nominalleistung des vierten sekundärseitigen Anschlusses P(4S4) entspricht, d.h. es gilt: 0,6*P(4S4) ≤ P(4S3) ≤ 1,4*P(4S4).

Bei dem Energieversorgungsnetz kann es sich um ein Niederspannungsnetz handeln, wobei die Energieversorgungsvorrichtung, insbesondere in Bezug auf den ersten Mehrfachfachwicklungs-Transformator und den zweiten Transformator, zum Anschluss an das Niederspannungsnetz ausgebildet ist. Bei einer hohen Nominalleistung des Elektrolyseurs kann das Energieversorgungsnetz jedoch ein Mittelspannungsnetz sein. Entsprechend diesem Fall kann die Energieversorgungsvorrichtung zur Verbindung mit dem Mittelspannungsnetz ausgebildet sein.

In einer Ausführungsform kann der erste Mehrfachwicklungs-Transformator als ein Dreiwicklungs-Transformator mit einer Primärwicklung und zwei separaten, d.h. galvanisch getrennten Sekundärwicklungen ausgelegt sein, wodurch der erste Mehrfachwicklungs-Transformator und damit auch die Energieversorgungsvorrichtung besonders preisgünstig realisierbar ist. Aus technischer Sicht bietet jedoch ein Vierwicklungs-Transformator eine bessere Entkopplung seiner sekundärseitigen Anschlüsse. Insbesondere können bei dem Vierwicklungs-Transformator Störsignale, die durch den ersten AC/DC-Wandler an seinem AC-Anschluss erzeugt werden und somit an dem zweiten sekundärseitigen Anschluss anliegen, weniger stark auf den ersten sekundärseitigen Anschluss übersprechen. Eine Unterdrückung der Störsignale von dem zweiten auf den ersten sekundärseitigen Anschluss und damit eine störunempfindliche Versorgung der Hilfsaggregate ist im Fall des Vierwicklungs-Transformators relativ zum Dreiwicklungs-Transformator besser möglich. Alternativ ist es daher auch möglich, dass der erste Mehrfachwicklungstransformator als ein Vierwicklungs-Transformator mit zwei Primärwicklungen und zwei separaten, d.h. galvanisch getrennten Sekundärwicklungen ausgebildet ist. Das Gleiche gilt so auch für den zweiten Transformator.

Eine erfindungsgemäße Elektrolyseanlage umfasst eine Elektrolyseeinheit mit einem Elektrolyseur und zumindest einem Hilfsaggregat zur chemischen Versorgung des Elektrolyseurs. Die Elektrolyseanlage beinhaltet zudem eine erfindungsgemäße Energieversorgungsvorrichtung, deren Gleichspannungsanschluss mit dem Elektrolyseur und deren Hilfsleistungsausgang mit dem zumindest einen Hilfsaggregat der Elektrolyseeinheit verbunden ist. Es ergeben sich die bereits in Verbindung mit der Energieversorgungsvorrichtung aufgeführten Vorteile.

### Kurzbeschreibung der Figuren

Im Folgenden wird die Erfindung mithilfe von Figuren erläutert. Von diesen zeigen
- **Fig. 1**: eine herkömmliche Elektrolyseanlage in einer ersten Variante,
- **Fig. 2**: eine herkömmliche Elektrolyseanlage in einer zweiten Variante,
- **Fig. 3**: eine erfindungsgemäße Elektrolyseanlage mit einer erfindungsgemäßen Energieversorgungsvorrichtung in einer Ausführungsform.

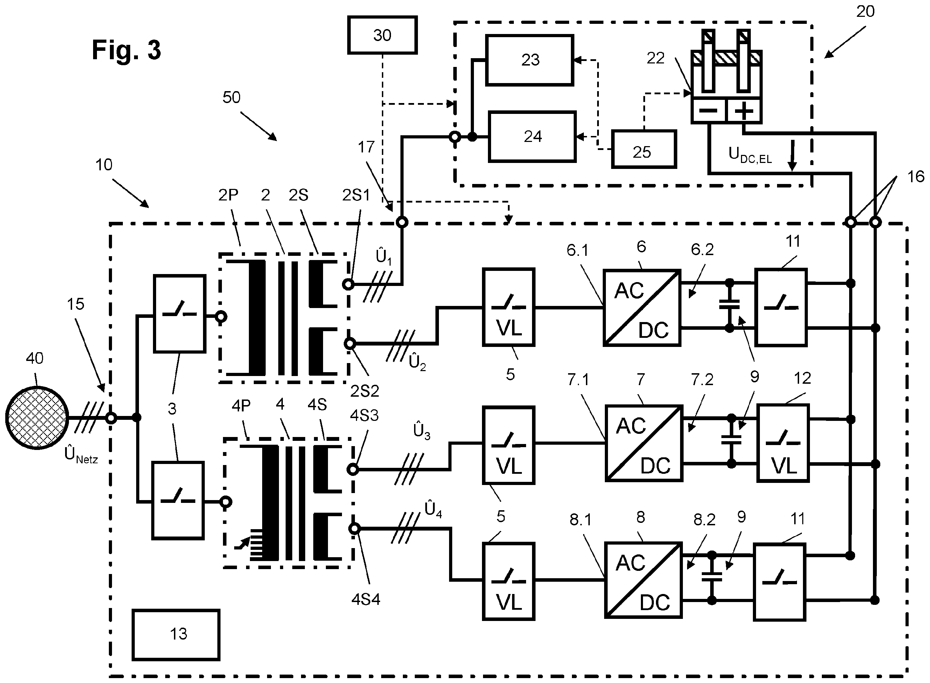

In **Fig. 3** ist eine erfindungsgemäße Elektrolyseanlage 50 mit einer erfindungsgemäßen Energieversorgungsvorrichtung 10 dargestellt. Die Elektrolyseanlage 50 weist die erfindungsgemäßen Energieversorgungsvorrichtung 10, eine Elektrolyseeinheit 20 und eine Steuerungseinheit 30 auf.

Im Folgenden wird die Energieversorgungsvorrichtung 10 detailliert beschrieben. Die Energieversorgungsvorrichtung 10 ist über einen Netzanschluss 15 mit einem Energieversorgungsnetz 40 verbunden. Zwischen dem Netzanschluss 15 und den Transformatoren 2 und 4 ist jeweils eine AC-Trenneinheit 3 angeordnet. Der erste Transformator 2 ist ein Mehrfachwicklungs-Transformator und weist eine mit dem Netzanschluss 15 verbundene Primärseite 2P und eine Sekundärseite 2S auf. Die Sekundärseite 2S weist einen ersten sekundärseitigen Anschluss 2S1 und ein zweiten sekundärseitigen Anschluss 2S2 auf. Der erste sekundärseitige Anschluss 2S 1 ist über einen Hilfsleistungsausgang 17 mit der Elektrolyseeinheit 20 verbunden und versorgt diese mit einer Wechselspannung mit einer ersten Spannungsamplitude U₁. Der zweite sekundärseitiger Anschluss 2S2 ist mit einem AC-Anschluss 6.1 eines ersten AC/DC-Wandlers 6 über eine AC-Trenneinheit 5 mit Vorlademittel VL verbunden und versorgt diesen mit einer zweiten AC-Spannungsamplitude Û₂. Der erste AC/DC-Wandler 6 ist mit seinem DC-Anschluss 6.2 über eine Ausgangskapazität 9 und eine DC-Trenneinheit 11 mit einem Gleichspannungsausgang 16 verbunden. Der erste AC/DC-Wandler 6 operiert im Betrieb der Elektrolyseanlage 50 gleichrichtend und kann die AC-Spannung an seinem AC-Anschluss 6.1 in eine DC-Spannung an seinem DC-Anschluss 6.2 umwandeln, die dann bei geschlossener DC-Trenneinheit 11 auch am Gleichspannungsausgang 16 der Energieversorgungsvorrichtung 10 anliegt.

Der zweite Transformator 4 ist exemplarisch ebenfalls als ein Mehrfachwicklungs-Transformator ausgelegt und weist eine Primärseite 4P und eine Sekundärseite 4S auf. Die Sekundärseite 4S weist einen dritten sekundärseitigen Anschluss 4S3 und einen vierten sekundärseitigen Anschluss 4S4 auf. Der dritte sekundärseitige Anschluss 4S3 ist über eine AC-Trenneinheit 5 mit Vorlademittel mit einem AC-Anschluss 7.1 eines zweiten AC/DC-Wandlers 7 verbunden und versorgt diesen mit einer Wechselspannung, die eine dritte AC-Spannungsamplitude Û₃ aufweist. Ferner ist der zweite AC/DC-Wandler 7 mit seinem DC-Anschluss 7.2 über eine Ausgangskapazität 9 und eine DC-Trenneinheit 12, die Vorlademittel VL aufweist, mit dem Gleichspannungsausgang 16 verbunden. Der zweite AC/DC-Wandler 7 kann die AC-Spannung am AC-Anschluss 7.1 in einer DC-Spannung am DC-Anschluss 7.2 umwandeln, die dann an dem Gleichspannungsausgang 16 anliegt.

Der vierte sekundärseitige Anschluss 4S4 ist mit einem AC-Anschluss 8.1 eines dritten AC/DC-Wandlers 8 über eine AC-Trenneinheit 5 mit Vorlademittel verbunden und versorgt diesen mit einer eine vierte Spannungsamplitude Û₄ aufweisenden Wechselspannung. Ferner ist der dritte AC/DC-Wandler 8 mit seinem DC-Anschluss 8.2 über eine Ausgangskapazität 9 und eine DC-Trenneinheit 12 mit dem Gleichspannungsausgang 16 verbunden. Der dritte AC/DC-Wandler 8 kann die AC-Spannung am AC-Anschluss 8.1 in eine DC-Spannung an seinem DC-Anschluss 8.2 umwandeln, die dann an dem Gleichspannungsausgang 16 anliegt. Mit anderen Worten können die AC/DC-Wandler 6, 7, 8 jeweilig eine AC-Spannung mit unterschiedlichen Spannungsamplituden Û₂. Û₃, Û₄ in eine DC-Spannung umwandeln und sind mit dem Gleichspannungsausgang 16 verbunden, sodass die DC-Spannung am Gleichspannungsausgang 16 anliegt. Bei dem ersten AC/DC-Wandler 6, gegebenenfalls auch bei den weiteren AC/DC-Wandlern 7, 8 kann es sich insbesondere jeweils um einen transistorbasierten AC/DC-Wandler handeln. Alle AC-Trenneinheiten 3, alle AC-Trenneinheiten 5 mit Vorlademittel, alle DC-Trenneinheiten 11 und die DC-Trenneinheit 12 mit Vorlademittel, sowie die AC/DC-Wandler 6, 7, 8 werden dabei von der Steuerungseinheit 13 der Energieversorgungsvorrichtung 10, gegebenenfalls auch in Kombination mit der übergreifenden Steuerungseinheit 30 gesteuert.

In Fig. 3 sind die Ausgangskapazitäten 9 jeweils als separate Komponenten dargestellt, die mit den DC-Anschlüssen 6.2, 7.2, 8.2 der ihnen zugeordneten AC/DC-Wandler 6, 7, 8 verbunden sind. Alternativ dazu ist es jedoch auch möglich, dass die Ausgangskapazitäten 9 zumindest teilweise, gegebenenfalls auch vollständig in die ihnen jeweils zugeordneten AC/DC-Wandler 6, 7, 8 integriert sind und daher Bestandteil der ihnen jeweils zugeordneten AC/DC-Wandler 6, 7, 8 sind.

Im Folgenden wird die Elektrolyseeinheit 20 detailliert beschrieben. Die Elektrolyseeinheit 20 weist einen Elektrolyseur 22, ein Hilfsaggregat 23, das eine Pumpe sein kann, ein Hilfsaggregat 24, das eine Heizung sein kann, und eine Steuerungseinheit 25 der Elektrolyseeinheit 22 auf. Exemplarisch sind lediglich zwei Hilfsaggregate gezeigt. Es liegt jedoch im Rahmen der Erfindung, dass die Elektrolyseeinheit 20 auch eine andere Anzahl an Hilfsaggregaten, insbesondere mehr als zwei Hilfsaggregate aufweist, die ebenfalls über den Hilfsleistungsausgang 17 der Energieversorgungsvorrichtung 10 elektrisch versorgt werden. Der Gleichspannungseingang (DC-Eingang) des Elektrolyseurs 22 ist mit dem Gleichspannungsausgang 16 der Energieversorgungsvorrichtung 10 verbunden und wird von dieser mit einer Gleichspannung versorgt. Die Hilfsaggregate 23, 24 werden über den Hilfsleistungsausgang 17 mit einer Wechselspannung von der Energieversorgungsvorrichtung 10 versorgt. Die Steuerungseinheit 25 der Elektrolyseeinheit steuert den Elektrolyseur 22, und die Hilfsaggregate 23, 24.

Die Steuerungseinheit 30 der Elektrolyseanlage 50 gibt Steuerungsbefehle sowohl an die Energieversorgungsvorrichtung 10 als auch an die Elektrolyseeinheit 20 und operiert im Betrieb der Elektrolyseanlage 50 als übergeordnete Steuerungseinheit. Die Steuerungseinheit 30 ermöglicht es somit, dass die Energieversorgungsvorrichtung 10 und die Elektrolyseeinheit 20 so gesteuert werden, dass ein reibungsloser Betrieb der Elektrolyseeinheit 20 gewährleistet ist. Die übergeordnete Steuerungseinheit 30 ist in Fig. 3 als separate Komponente dargestellt. Alternativ dazu ist es jedoch auch möglich, dass übergeordnete Steuerungsfunktionen auch innerhalb der Steuerungseinheit 13 der Energieversorgungsvorrichtung 10 und/oder der Steuerungseinheit 25 der Elektrolyseeinheit 22 abgearbeitet werden können. In diesem Fall ist es möglich, dass die übergeordnete Steuerungseinheit 30 nicht als separate Komponente, sondern aufgeteilt auf zumindest eine der Steuerungseinheiten 13, 25 vorliegt.

Im Folgenden wird ein Betrieb der Elektrolyseanlage 50 am Beispiel eines Aufstartens der Elektrolyseanlage 50 beschrieben. Dafür wird angenommen, dass alle AC-Trenneinheiten 3, 5 sowie alle DC-Trenneinheiten 11, 12 geöffnet sind. Weiterhin sind die Übersetzungsverhältnisse der Transformatoren 2, 4 exemplarisch so gewählt, dass für die Spannungsamplituden Û₂, Û₃, Û₄ gilt: Û₂ > Û₄ > Û₃. Die erste Spannungsamplitude U₁ ist über das dem ersten sekundärseitigen Anschluss 2S1 des ersten Mehrfachwicklungs-Transformators 2 zugeordnete Übersetzungsverhältnis auf einen Wert eingestellt, der zur Versorgung der Hilfsaggregate 23, 24 benötigt wird, beispielsweise 400 V oder 480 V. Sie ist üblicherweise kleiner als die zweite Spannungsamplitude U₂. Sie kann optional auch kleiner als die vierte Spannungsamplitude U₄, gegebenenfalls auch kleiner als die dritte Spannungsamplitude U₃, sein. Zunächst werden nun die AC-Trenneinheiten 3 geschlossen, wodurch über den ersten sekundärseitigen Anschluss 2S1 eine Wechselspannung der Spannungsamplitude Û₁ generiert und den Hilfsaggregaten 23, 24 der Elektrolyseeinheit 22 bereitgestellt wird. Diese können daher gesteuert über die Steuerungseinheit 25 der Elektrolyseeinheit 20 die chemische Versorgung des Elektrolyseurs 22 übernehmen und ihn in einen betriebsbereiten Zustand überführen. Weiterhin wird die dem dritten sekundärseitigen Anschluss 4S3 zugeordnete AC-Trenneinheit 5, gegebenenfalls auch die anderen noch geöffneten AC-Trenneinheiten 5 geschlossen. Durch die in den AC-Trenneinheiten 5 enthaltenen Vorlademittel VL erfolgt nun eine stromlimitierte Vorladung der dem zweiten AC/DC-Wandler 7 zugeordneten Ausgangskapazität 9 und gegebenenfalls auch derjenigen Ausgangskapazitäten 9, die den weiteren AC/DC-Wandlern 6, 8 zugeordnet sind. Aufgrund der unterschiedlichen Spannungsamplituden Û₂, Û₃, Û₄ können auch die an den Ausgangskapazitäten 9 anliegenden minimal möglichen Spannungen unterschiedlich sein. Anschließend wird die ein Vorlademittel VL aufweisende DC-Trenneinheit 12 geschlossen, wodurch der DC-Eingang des Elektrolyseurs 22 über den zweiten AC/DC-Wandler 7 vorgeladen wird. Erreicht oder überschreitet die über den zweiten AC/DC-Wandler 7 bereitgestellte DC-Spannung U_{DC,EL} eine Leerlaufspannung U₀ des Elektrolyseurs 20, so beginnt darin eine Elektrolysereaktion abzulaufen.

Das Aufstarten und ein Teillastbetrieb des Elektrolyseurs 22 kann mit lediglich dem zweiten AC/DC-Wandler 7 erfolgen. Ein zunehmender Leistungsverbrauch des Elektrolyseurs 22 wird mittels einer Höhe der an dem Gleichspannungsausgang 16 bereitgestellten DC-Spannung U_{DC,EL} gesteuert. Hat sich die an dem DC-Eingang des Elektrolyseurs 22 anliegende DC-Spannung U_{DC,EL} einer an einer der weiteren Ausgangskapazitäten 9 anliegenden DC-Spannung ausreichend angenähert, so können die noch verbleibenden DC-Trenneinheiten 11, die jeweils einem noch nicht dem Elektrolyseur 22 zugeschalteten AC/DC-Wandler 6, 8 zugeordnet sind, geschlossen werden. Aufgrund einer ausreichend erfolgenden Annäherung zwischen einer an den Ausgangskapazitäten 9 jeweils anliegenden DC-Spannung und der an dem DC-Eingang des Elektrolyseurs 22 anliegenden DC-Spannung können die entsprechenden DC-Trenneinheiten 11 jeweils ohne ein Vorlademittel VL ausgeführt sein.

Der oben dargestellte Betrieb wurde exemplarisch am Beispiel eines Aufstartens der Elektrolyseanlage 50 und einer folgenden Leistungszunahme des Elektrolyseurs 22 erläutert, bei dem die AC/DC-Wandler 6, 7, 8 nacheinander dem Elektrolyseur 22 mittels der ihnen zugeordneten DC-Trenneinheiten 11, 12 zugeschaltet werden. Bei einer Leistungsabnahme des Elektrolyseurs 22 können die AC/DC-Wandler 6, 7, 8 jeweils in umgekehrter Reihenfolge durch Öffnen der entsprechenden DC-Trenneinheiten 11, 12 wieder getrennt werden.

### Bezugszeichenliste

- 2: (erster) Mehrfachwicklungs-Transformator
- 2P: Primärseite
- 2S: Sekundärseite
- 2S1: erster sekundärseitiger Anschluss
- 2S2: zweiter sekundärseitiger Anschluss
- 3: AC-Trenneinheit
- 4: (zweiter) Transformator
- 4P: Primärseite
- 4S: Sekundärseite
- 4S3: dritter sekundärseitiger Anschluss
- 4S4: Vierter sekundärseitiger Anschluss
- 5: AC-Trenneinheit (mit Vorlademittel VL)
- 6,7,8: AC/DC-Wandler
- 6.1, 7.1, 8.1: AC-Anschluss
- 6.2, 7.2, 8.2: DC-Anschluss
- 9: Ausgangskapazität
- 10: Energieversorgungsvorrichtung
- 11: DC-Trenneinheit (ohne Vorlademittel)
- 12: DC-Trenneinheit (mit Vorlademittel)
- 13: Steuerungseinheit (der Versorgungsvorrichtung)
- 15: Netzanschluss
- 16: Gleichspannungsausgang
- 17: Hilfsleistungsausgang
- 20: Elektrolyseeinheit
- 21: Gleichspannungseingang (DC-Eingang)
- 22: Elektrolyseur
- 23: Hilfsaggregat (Pumpe)
- 24: Hilfsaggregat (Heizung)
- 25: Steuerungseinheit (des Elektrolyseeinheit)
- 30: Steuerungseinheit (der Elektrolyseanlage)
- 40: Energieversorgungsnetz
- 50: Elektrolyseanlage

- 100, 200: Energieversorgungsvorrichtung
- 102, 104, 202: Transformator
- 103, 203: AC-Trenneinheit
- 105, 205: AC-Trenneinheit (mit Vorlademittel)
- 106, 206: AC/DC-Wandler
- 106.1, 206.1: AC-Anschluss
- 106.2, 206.2: DC-Anschluss
- 112, 212: DC-Trenneinheit (mit Vorlademittel VL)
- 115, 215: Netzanschluss
- 116, 216: Gleichspannungsausgang
- 117, 217: Hilfsleistungsausgang

## Patentansprüche

1. Energieversorgungsvorrichtung (10) für eine Elektrolyseeinheit (20), aufweisend
- einen Netzanschluss (15) zum Anschluss an ein Energieversorgungsnetz (40),
- einen Gleichspannungsausgang (16) zum Anschluss eines Elektrolyseurs (22) der Elektrolyseeinheit (20),
- einen Hilfsleistungsausgang (17) zum Anschluss zumindest eines Hilfsaggregates (23, 24) der Elektrolyseeinheit (20),
- einen ersten Mehrfachwicklungs-Transformator (2) mit einer mit dem Netzanschluss (15) verbundenen Primärseite (2P) und einer Sekundärseite (2S), und weiterhin aufweisend
- einen zweiten Transformator (4) mit einer mit dem Netzanschluss (15) verbundenen Primärseite (4P), und einer Sekundärseite (4S),
- einen ersten und einen zweiten AC/DC-Wandler,
**dadurch gekennzeichnet, dass**
- die Sekundärseite (2S) des ersten Mehrfachwicklungs-Transformators (2) einen ersten sekundärseitigen Anschluss (2S1) und einen davon galvanisch getrennten zweiten sekundärseitigen Anschluss (2S2) aufweist,
- wobei der erste sekundärseitige Anschluss (2S1) eine erste Spannungsamplitude Û₁ bereitstellt und mit dem Hilfsleistungsausgang (17) verbunden ist, und
- wobei der zweite sekundärseitige Anschluss (2S2) eine zweite Spannungsamplitude Û₂ bereitstellt und mit einem AC-Anschluss (6.1)des ersten AC/DC-Wandlers (6) verbunden ist, dessen DC-Anschluss (6.2) mit dem Gleichspannungsausgang (16) verbunden ist, und
- wobei die Sekundärseite (4S) des zweiten Transformators (4) einen dritten sekundärseitigen Anschluss (4S3) aufweist, der eine dritte Spannungsamplitude Û₃ bereitstellt und mit einem AC-Anschluss (7.1) des zweiten AC/DC-Wandlers (7) verbunden ist, dessen DC-Anschluss (7.2) mit dem Gleichspannungsausgang (16) verbunden ist, und
- wobei die Primärseite (2P) und der erste sekundärseitige Anschluss (2S1) des ersten Mehrfachwicklungs-Transformators (2) oder die Primärseite (2P) und die Sekundärseite (2S) des ersten Mehrfachwicklungs-Transformators (2) jeweils frei von einem Stufenschalter sind.

2. Energieversorgungsvorrichtung (10) nach Anspruch 1, wobei die Sekundärseite (4S) des zweiten Transformators (4) einen vierten sekundärseitigen Anschluss (4S4) aufweist, der eine vierte Spannungsamplitude Û₄ bereitstellt und mit einem AC-Anschluss (8.1) eines dritten AC/DC-Wandlers (8) verbunden ist, dessen DC-Anschluss (8.2) mit dem Gleichspannungsausgang (16) verbunden ist.

3. Energieversorgungsvorrichtung (10) nach Anspruch 1 oder 2, wobei der zweite Transformator (4) einen Stufenschalter auf seiner Primärseite (4P) oder seiner Sekundärseite (4S) aufweist.

4. Energieversorgungsvorrichtung (10) nach einem der vorangehenden Ansprüche, wobei zumindest ein AC/DC-Wandler (6-8), optional auch jeder AC/DC-Wandler (6, 7, 8) AC-seitig über eine Vorlademittel (VL) aufweisende AC-Trenneinheit (5) mit dem ihm jeweils zugeordneten Transformator (2, 4) verbunden ist.

5. Energieversorgungsvorrichtung (10) nach einem der vorangehenden Ansprüche, **dadurch gekennzeichnet, dass** zwischen jedem der AC/DC-Wandler (6-8) und dem Gleichspannungsausgang (16) eine DC-Trenneinheit (11, 12) angeordnet ist, von denen eine DC-Trenneinheit (11), gegebenenfalls auch mehrere DC-Trenneinheiten (11) frei von einem Vorlademittel (VL) ist/ sind.

6. Energieversorgungsvorrichtung (10) nach einem der vorangehenden Ansprüche, wobei die zweite Spannungsamplitude Û₂ größer als die dritte Spannungsamplitude Û₃, optional auch größer als die vierte Spannungsamplitude Û₄ ist.

7. Energieversorgungsvorrichtung (10) nach einem der vorangehenden Ansprüche, wobei der zweite Transformator (4) als Mehrfachwicklungs-Transformator ausgelegt ist, und wobei der erste Mehrfachwicklungs-Transformator (2) und der zweite Transformator (4) die gleiche Nominalleistung aufweisen.

8. Energieversorgungsvorrichtung (10) nach einem der vorangehenden Ansprüche, wobei der zweite sekundärseitige Anschluss (2S2) eine um zumindest 10% verschiedene Nominalleistung aufweist als der erste sekundärseitige Anschluss (2S1).

9. Energieversorgungsvorrichtung (10) nach einem der vorangehenden Ansprüche, soweit zurückbezogen auf Anspruch 2, wobei eine Nominalleistung des dritten sekundärseitigen Anschlusses P(4S3) verschieden zu einer Nominalleistung P(4S4) des vierten sekundärseitigen Anschlusses P(4S4) ist.

10. Energieversorgungsvorrichtung (10) nach einem der vorangehenden Ansprüche, wobei der zweite sekundärseitige Anschluss (2S2) eine höhere Nominalleistung aufweist als die halbierte auf der Sekundärseite (4S) des zweiten Transformators (4) vorhandene Nominalleistung, d.h. dass gilt P(2S2) > 0,5 * P(4S).

11. Energieversorgungsvorrichtung (10) nach einem der vorangehenden Ansprüche, wobei die Energieversorgungsvorrichtung (10) zum Anschluss an ein Mittelspannungsnetz als Energieversorgungsnetz (40) ausgebildet ist.

12. Energieversorgungsvorrichtung (10) nach einem der vorangehenden Ansprüche, wobei der erste Mehrfachwicklungs-Transformator (2) als ein Dreiwicklungs-Transformator mit einer Primärwicklung und zwei separaten Sekundärwicklungen ausgelegt ist.

13. Energieversorgungsvorrichtung (10) nach einem der Ansprüche 1 bis 11, wobei der erste Mehrfachwicklungs-Transformator (2) als ein Vierwicklungs-Transformator mit zwei Primärwicklungen und zwei separaten Sekundärwicklungen ausgelegt ist.

14. Energieversorgungsvorrichtung (10) nach einem der vorangehenden Ansprüche, wobei der erste AC/DC-Wandler (6), optional auch der zweite AC/DC-Wandler (7) und/oder der dritte AC/DC-Wandler (8) als ein transistorbasierter AC/DC-Wandler ausgebildet ist.

15. Elektrolyseanlage (50) umfassend
- eine Elektrolyseeinheit (20) mit einem Elektrolyseur (22) und zumindest einem Hilfsaggregat (23, 24) zur chemischen Versorgung des Elektrolyseurs (22), und
- eine Energieversorgungsvorrichtung (10) nach einem der vorangehenden Ansprüche, deren Gleichspannungsanschluss (16) mit dem Elektrolyseur (22) und deren Hilfsleistungsausgang (17) mit dem zumindest einen Hilfsaggregat (23, 24) der Elektrolyseeinheit (20) verbunden ist.

## Claims

1. Energy supply device (10) for an electrolysis unit (20), comprising
- a grid connection (15) for connection to an energy supply grid (40),
- a DC voltage output (16) for connecting an electrolyser (22) of the electrolysis unit (20),
- an auxiliary power output (17) for connecting at least one auxiliary unit (23, 24) of the electrolysis unit (20),
- a first multi-winding transformer (2) having a primary side (2P), connected to the grid connection (15), and a secondary side (2S), and further comprising
- a second transformer (4) with a primary side (4P), connected to the grid connection (15), and a secondary side (4S),
- a first and a second AC/DC converter, **characterised in that**
- the secondary side (2S) of the first multi-winding transformer (2) has a first secondary-side connection (2S1) and a second secondary-side connection (2S2) galvanically isolated therefrom,
- wherein the first secondary-side connection (2S1) provides a first voltage amplitude Û₁ and is connected to the auxiliary power output (17), and
- wherein the second secondary-side connection (2S2) provides a second voltage amplitude Û₂ and is connected to an AC connection (6.1) of the first AC/DC converter (6), the DC connection (6.2) of which is connected to the DC voltage output (16), and
- wherein the secondary side (4S) of the second transformer (4) has a third secondary-side connection (4S3) which provides a third voltage amplitude Û₃ and is connected to an AC connection (7.1) of the second AC/DC converter (7), the DC connection (7.2) of which is connected to the DC voltage output (16), and
- wherein the primary side (2P) and the first secondary-side connection (2S1) of the first multi-winding transformer (2) or the primary side (2P) and the secondary side (2S) of the first multi-winding transformer (2) are each free of any tap changer.

2. Energy supply device (10) according to claim 1, wherein the secondary side (4S) of the second transformer (4) has a fourth secondary-side connection (4S4) which provides a fourth voltage amplitude Û₄ and is connected to an AC connection (8.1) of a third AC/DC converter (8), the DC connection (8.2) of which is connected to the DC voltage output (16).

3. Energy supply device (10) according to claim 1 or 2, wherein the second transformer (4) comprises a tap changer on its primary side (4P) or its secondary side (4S).

4. Energy supply device (10) according to any one of the preceding claims, wherein at least one AC/DC converter (6-8), optionally also each AC/DC converter (6, 7, 8), is connected on the AC side to the transformer (2, 4) assigned to it in each case via an AC isolation unit (5) having pre-charging means (VL).

5. Energy supply device (10) according to any one of the preceding claims, **characterised in that**, between each of the AC/DC converters (6-8) and the direct voltage output (16), there is arranged a DC isolation unit (11, 12), of which one DC isolation unit (11), possibly also a plurality of DC isolation units (11), is/are free of a pre-charging means (VL).

6. Energy supply device (10) according to any one of the preceding claims, wherein the second voltage amplitude Û₂ is greater than the third voltage amplitude Û₃, optionally also greater than the fourth voltage amplitude Û₄.

7. Energy supply device (10) according to any one of the preceding claims, wherein the second transformer (4) is designed as a multi-winding transformer, and wherein the first multi-winding transformer (2) and the second transformer (4) have the same nominal power.

8. Energy supply device (10) according to any one of the preceding claims, wherein the second secondary-side connection (2S2) has a nominal power that is different by at least 10% from that of the first secondary-side connection (2S1).

9. Energy supply device (10) according to any one of the preceding claims, insofar as dependent upon claim 2, wherein a nominal power of the third secondary-side connection P(4S3) is different from a nominal power P(4S4) of the fourth secondary-side connection P(4S4).

10. Energy supply device (10) according to any one of the preceding claims, wherein the second secondary-side connection (2S2) has a nominal power higher than half the nominal power present at the secondary side (4S) of the second transformer (4), i.e., P(2S2) > 0.5 * P(4S).

11. Energy supply device (10) according to any one of the preceding claims, wherein the energy supply device (10) is configured for connection to a medium-voltage grid as energy supply grid (40).

12. Energy supply device (10) according to any one of the preceding claims, wherein the first multi-winding transformer (2) is designed as a three-winding transformer with a primary winding and two separate secondary windings.

13. Energy supply device (10) according to any one of claims 1 to 11, wherein the first multi-winding transformer (2) is designed as a four-winding transformer with two primary windings and two separate secondary windings.

14. Energy supply device (10) according to any one of the preceding claims, wherein the first AC/DC converter (6), optionally also the second AC/DC converter (7) and/or the third AC/DC converter (8), is designed as a transistor-based AC/DC converter.

15. Electrolysis installation (50), comprising
- an electrolysis unit (20) with an electrolyser (22) and at least one auxiliary unit (23, 24) for the chemical supply of the electrolyser (22), and
- an energy supply device (10) according to any one of the preceding claims, the DC voltage connection (16) of which is connected to the electrolyser (22) and the auxiliary power output (17) of which is connected to the at least one auxiliary unit (23, 24) of the electrolysis unit (20).

## Revendications

1. Dispositif d'alimentation électrique (10) pour une unité d'électrolyse (20), comprenant
- un raccordement au réseau (15) pour le raccordement à un réseau d'alimentation électrique (40),
- une sortie de tension continue (16) pour le raccordement d'un électrolyseur (22) de l'unité d'électrolyse (20),
- une sortie d'alimentation auxiliaire (17) pour le raccordement d'au moins un groupe auxiliaire (23, 24) de l'unité d'électrolyse (20),
- un premier transformateur à enroulements multiples (2) avec un côté primaire (2P) relié au raccordement au réseau (15) et un côté secondaire (2S), et comprenant en outre
- un deuxième transformateur (4) avec un côté primaire (4P) relié au raccordement au réseau (15) et un côté secondaire (4S),
- un premier et un deuxième convertisseur CA/CC, **caractérisé en ce que**
- le côté secondaire (2S) du premier transformateur à enroulements multiples (2) comporte une première connexion côté secondaire (2S1) et une deuxième connexion côté secondaire (2S2) isolée galvaniquement,
- dans lequel la première connexion côté secondaire (2S1) fournissant une première amplitude de tension Û1 et étant reliée à la sortie d'alimentation auxiliaire (17), et
- dans lequel la deuxième connexion côté secondaire (2S2) fournissant une deuxième amplitude de tension Û2 et étant reliée à une connexion CA (6.1) du premier convertisseur CA/CC (6), dont la connexion CC (6.2) est reliée à la sortie de tension continue (16), et
- dans lequel le côté secondaire (4S) du deuxième transformateur (4) comportant une troisième connexion côté secondaire (4S3) qui fournit une troisième amplitude de tension Û3 et qui est reliée à une connexion CA (7.1) du deuxième convertisseur CA/CC (7) dont la connexion CC (7.2) est connectée à la sortie de tension continue (16), et
- dans lequel le côté primaire (2P) et la première connexion côté secondaire (2S1) du premier transformateur à enroulements multiples (2) ou le côté primaire (2P) et le côté secondaire (2S) du premier transformateur à enroulements multiples (2) étant respectivement dépourvus de commutateur à gradins.

2. Dispositif d'alimentation électrique (10) selon la revendication 1, dans lequel le côté secondaire (4S) du deuxième transformateur (4) comporte une quatrième connexion côté secondaire (4S4) qui fournit une quatrième amplitude de tension Û4 et est connectée à une borne CA (8.1) d'un troisième convertisseur CA/CC (8) dont la borne CC (8.2) est connectée à la sortie de tension continue (16).

3. Dispositif d'alimentation électrique (10) selon la revendication 1 ou 2, dans lequel le deuxième transformateur (4) comporte un commutateur à gradins sur son côté primaire (4P) ou son côté secondaire (4S).

4. Dispositif d'alimentation électrique (10) selon l'une des revendications précédentes, dans lequel au moins un convertisseur CA/CC (6-8), éventuellement chaque convertisseur CA/CC (6, 7, 8) est relié, côté CA, au transformateur (2, 4) qui lui est respectivement associé par l'intermédiaire d'une unité de séparation CA (5) comportant des moyens de précharge (VL).

5. Dispositif d'alimentation électrique (10) selon l'une des revendications précédentes, **caractérisé en ce qu'**une unité de séparation CC (11, 12) est disposée entre chacun des convertisseurs CA/CC (6-8) et la sortie de tension continue (16), une unité de séparation CC (11), éventuellement plusieurs unités de séparation CC (11) sont exemptes d'un moyen de précharge (VL).

6. Dispositif d'alimentation électrique (10) selon l'une des revendications précédentes, dans lequel la deuxième amplitude de tension Û2 est supérieure à la troisième amplitude de tension Û3, et éventuellement également supérieure à la quatrième amplitude de tension Û4.

7. Dispositif d'alimentation électrique (10) selon l'une des revendications précédentes, dans lequel le deuxième transformateur (4) est conçu comme un transformateur à enroulements multiples, et dans lequel le premier transformateur à enroulements multiples (2) et le deuxième transformateur (4) ont la même puissance nominale.

8. Dispositif d'alimentation électrique (10) selon l'une des revendications précédentes, dans lequel le deuxième connexion côté secondaire (2S2) présente une puissance nominale différente d'au moins 10 % de celle du premier connexion côté secondaire (2S1).

9. Dispositif d'alimentation électrique (10) selon l'une des revendications précédentes, dans la mesure où il se réfère à la revendication 2, dans lequel une puissance nominale de la troisième connexion côté secondaire P(4S3) est différente d'une puissance nominale P(4S4) de la quatrième connexion côté secondaire P(4S4).

10. Dispositif d'alimentation électrique (10) selon l'une des revendications précédentes, dans lequel la deuxième connexion côté secondaire (2S2) présente une puissance nominale supérieure à la moitié de la puissance nominale disponible côté secondaire (4S) du deuxième transformateur (4), c'est-à-dire que P(2S2) > 0,5 * P(4S).

11. Dispositif d'alimentation électrique (10) selon l'une des revendications précédentes, dans lequel le dispositif d'alimentation électrique (10) est conçu pour être raccordé à un réseau moyenne tension en tant que réseau d'alimentation électrique (40).

12. Dispositif d'alimentation électrique (10) selon l'une des revendications précédentes, dans lequel le premier transformateur à enroulements multiples (2) est conçu comme un transformateur à trois enroulements avec un enroulement primaire et deux enroulements secondaires séparés.

13. Dispositif d'alimentation électrique (10) selon l'une des revendications 1 à 11, dans lequel le premier transformateur à enroulements multiples (2) est conçu comme un transformateur à quatre enroulements avec deux enroulements primaires et deux enroulements secondaires séparés.

14. Dispositif d'alimentation électrique (10) selon l'une des revendications précédentes, dans lequel le premier convertisseur CA/CC (6), éventuellement également le deuxième convertisseur CA/CC (7) et/ou le troisième convertisseur CA/CC (8), est conçu comme un convertisseur CA/CC à transistors.

15. Installation d'électrolyse (50) comprenant
- une unité d'électrolyse (20) avec un électrolyseur (22) et au moins un groupe auxiliaire (23, 24) pour l'alimentation chimique de l'électrolyseur (22), et
- un dispositif d'alimentation électrique (10) selon l'une des revendications précédentes, dont le sortie à tension continue (16) est relié à l'électrolyseur (22) et dont la sortie d'alimentation auxiliaire (17) est reliée au moins à un groupe auxiliaire (23, 24) de l'unité d'électrolyse (20).
